(19) Europäisches Patentamt
European Patent Office
Office européen des brevets

(11) **EP 1 903 671 A2**

(12) **EUROPEAN PATENT APPLICATION**

(43) Date of publication:
26.03.2008 Bulletin 2008/13

(51) Int Cl.:
*H02P 27/08* (2006.01)    *H02P 21/13* (2006.01)

(21) Application number: **07018497.3**

(22) Date of filing: **20.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **20.09.2006 JP 2006253789**

(71) Applicant: **NSK Ltd.**
**Tokyo 141-8560 (JP)**

(72) Inventor: **Jiang, ChunHao**
**Maebashi-shi**
**Gunma 371-8527 (JP)**

(74) Representative: **Grünecker, Kinkeldey,**
**Stockmair & Schwanhäusser**
**Anwaltssozietät**
**Maximilianstrasse 58**
**80538 München (DE)**

(54) **Motor control method and motor controller**

(57)    The present invention provides a motor control method and a motor controller. In the motor control method and the motor controller according to the present invention, even when production tolerance of a motor or a control unit (ECU) or the change of an environment arises, abnormal sound of the motor due to the saturation of a motor applied voltage (Duty 100%) is not generated and a maximum output of the motor can be obtained and they may be applied to an electric power steering device. In a motor control method for controlling a motor by a motor driving voltage command value of a PWM, the motor control method includes the steps of calculating a degree of saturation of a motor driving voltage, and correcting a motor current command limit value based on the degree of saturation of the driving voltage.

FIG. 1

EP 1 903 671 A2

## Description

This application is based on and claims priority from Japanese Patent Application No. 2006-253789, filed on Sep. 20, 2006, the entire contents of which are hereby incorporated by reference.

BACKGROUND OF THE INVENTION

1. Technical Field

The present invention relates to a control method and a controller of a permanent magnet type brush-less DC motor, and more particularly to a motor control method and a motor controller in which a motor current command limit value is corrected based on a degree of saturation of a driving voltage (a degree of tolerance of the driving voltage) with respect to the variation of parameters due to a production tolerance of the motor and a controller (ECU) or the change of a system environment during an operation to prevent an abnormal sound due to the saturation of the driving voltage and prevent a phenomenon that the output of the motor is lowered due to an excessive limitation of the current command value. The motor control method and the motor controller are suitable for an electric power steering device of a vehicle.

2. Background Art

The motor, especially, the permanent magnet type DC brush-less motor has been widely used, and employed as a driving source. For example, they are used in the electric power steering device that applies an assist force by the rotating force of the motor to lightly operate a wheel of a vehicle. The electric power steering device transmits the driving force of the motor by a transmitting mechanism such as a gear or a belt through a reduction gear to apply the assist force on a steering shaft or a rack shaft.

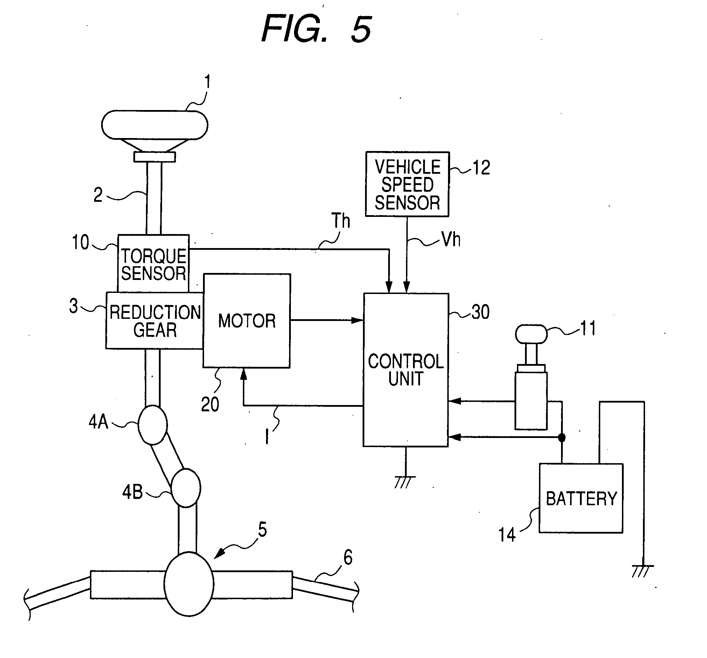

An ordinary structure of the electric power steering device is shown in Fig. 5. A column shaft 2 of a steering wheel 1 is connected to a tie rod 6 of a steering wheel via a reduction gear 3, universal joints 4A and 4B and a pinion rack mechanism 5. In the column shaft 2, a torque sensor 10 is provided for detecting the steering torque of the steering wheel 1. A motor 20 for assisting the steering force of the steering wheel 1 is connected to the column shaft 2 through the reduction gear 3. To a control unit (ECU) 30 for controlling the power steering device, an electric power is supplied from a battery 14 and an ignition key signal is inputted from an ignition key 11. The control unit 30 calculates a steering assist command value (a current command value) I of an assist command using an assist map in accordance with the steering torque $T_h$ detected by the torque sensor 10 and a vehicle speed $V_h$ detected by a vehicle speed sensor 12 and controls a current supplied to the motor 20 based on the calculated steering assist command value (the current command value) I.

In the electric power steering device having the above-described structure, the torque sensor 10 detects the steering torque $T_h$ in accordance with the driver's steering that is transmitted from the steering wheel 1. The motor 20 is driven and controlled by the current command value (the steering assist command value) calculated on the basis of the detected steering torque $T_h$ or the vehicle speed $V_h$. This drive makes the assist force of the driver's steering operation, so that the driver can operate the handle with light steering. That is, the current command value (the steering assist command value) is calculated from the steering torque $T_h$ outputted by the steering and the vehicle speed $V_h$, and whether a feeling in steering is good or not is determined and the performance of the electric power steering device is greatly influenced depending on how the motor 20 is controlled in accordance with current command value (the steering assist command value).

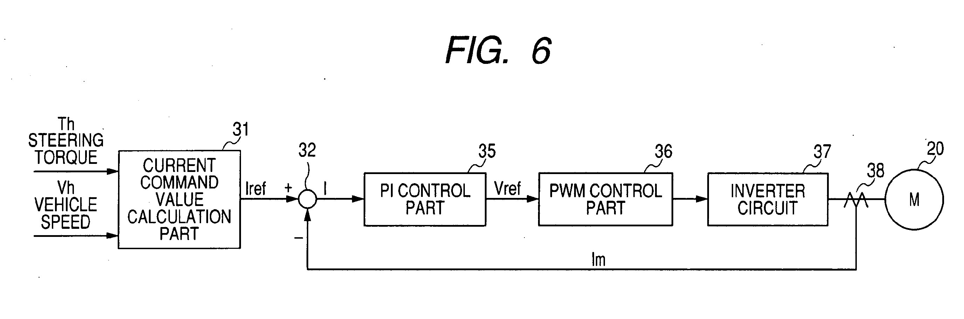

The control unit 30 is mainly composed of a CPU (including an MPU or an MCU) and ordinary functions executed by a program in the CPU are shown in Fig. 6.

The function and operation of the control unit 30 will be described by referring to Fig. 6. The steering torque $T_h$ detected in the torque sensor 10 and the vehicle speed $V_h$ detected by the vehicle speed sensor 12 are inputted to a current command value calculation part 31 for calculating a current command value $I_{ref}$. The current command value calculation part 31 uses the assist map in accordance with the inputted steering torque $T_h$ and the vehicle speed $V_h$ to determine the current command value $I_{ref}$ as a control target value of the current supplied to the motor 20. The current command value $I_{ref}$ is inputted to a subtracting part 32 to calculate a deviation I ($I_{ref}$ - $I_m$) between the current command value $I_{ref}$ and a feedback motor current $I_m$. The deviation I is inputted to a PI control part 35 for improving the characteristics of a steering operation. A voltage command value $V_{ref}$ having characteristics improved in the PI control part 35 is inputted to a PWM control part 36. Further, the motor 20 is PNM driven through an inverter circuit 37 as a driving part by a driving voltage command value whose duty is calculated. The current value $I_m$ of the motor 20 is detected by a motor current detector 38 and fed back to the subtracting part 32.

As method for controlling a motor by the duty of a PWM, for instance, there is a motor driving device disclosed in Patent Document 1: JP-A-2005-33957. The motor driving device disclosed in the Patent Document 1 includes an inverter for driving a three-phase motor, a current detecting unit for detecting an inverter bus current, a DC voltage detecting unit for detecting the voltage of a DC power source connected to the inverter, an induced voltage estimating unit for estimating the induced voltage of the motor from the output voltage value of the inverter and a current value detected by the current detecting unit, a rotor position and speed estimating unit for estimating the magnetic pole position and the rotation speed of a rotor of the motor in accordance with the induced voltage estimated value, a PWM signal generating unit for generating a PWM signal for controlling the inverter based on the information of the estimated magnetic pole position of the rotor, a duty correcting unit for correcting the duty of the PWM signal generated in the PWM signal generating unit and a voltage saturation control unit for calculating a voltage saturation factor as a degree of voltage saturation from the output of the DC voltage detecting unit and a voltage command value applied to the motor to compare the voltage saturation factor with a voltage saturation factor setting value switched based on the rotation speed of the motor estimated by the rotor position and speed estimating unit and lower an externally applied rotation speed target value until the voltage saturation factor is smaller than the voltage saturation factor setting value only when the voltage saturation factor is equal to or higher than the voltage saturation factor setting value.

Further, as another control method, there is a motor controller disclosed in Patent Document 2:JP-A-10-313600. The motor controller disclosed in the Patent Document 2 includes rotors of P poles (an even number of 2 or more), stator winding of K phase (an integer of 2 or more) generating a magnetic flux inter-linking with the rotors, a current command generating unit for generating a current command as a command value of a stator current supplied to the stator winding, a driving unit for supplying an electric power to the stator winding based on the current command, a stator current detecting unit for detecting a stator current supplied to the stator winding, a degree of saturation generating unit for generating a degree of saturation showing to what degree the stator current does not follow the current command, a pole position signal generating unit for generating a pole position signal based on the pole position of the rotor. The current command generating unit generates the current command based on the degree of saturation and the degree of saturation generating unit generates the degree of saturation based on the current command, the stator current and the pole position signal.

However, in the device disclosed in the Patent Document 1, the motor rotation speed is adjusted to prevent the saturation of the voltage for the control of the saturation of the voltage. That is, according to this control method, while the back electromotive voltage of the motor is adjusted, the voltage applied to the motor is made to correspond to the terminal voltage of the motor. However, the control of the motor used in the electric power steering device is not carried out by controlling the speed, but by controlling a torque (current), the above-described control method cannot be applied to the electric power steering device.

Further, the method disclosed in the Patent Document 2 depends on the degree of saturation showing to what degree the stator current does not follow the stator current command, namely, depends on a current sensor. Then, the accuracy and the error of the current sensor affect the generation of the degree of saturation.

A current command limit value in a usual motor control is calculated using design values of a motor and a control unit (ECU). The current command limit value is basically calculated from a current command limit value calculation map in which a supply voltage is set to be constant and a corrected rotation speed calculation map depending on the variation of the supply voltage, and is a function incorporated in the current command value calculation part 31 in Fig. 6.

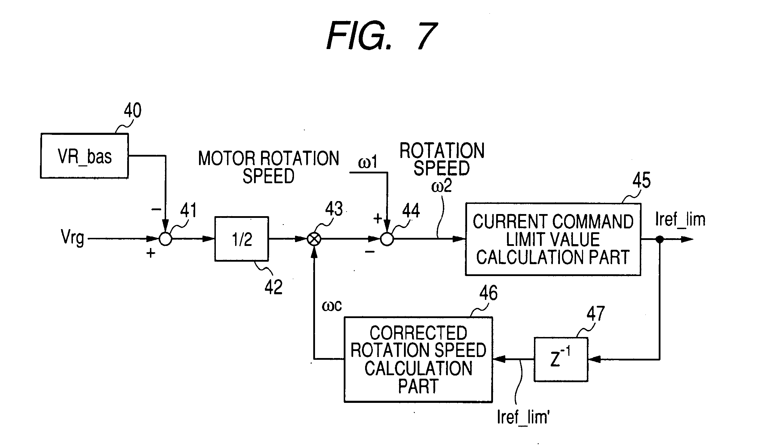

As shown in Fig. 7, in the usual structure of a current command limit value signal calculation part 40, a supply voltage $V_{rg}$ serving as a motor driving voltage is added and inputted to a subtracting part 41. A base voltage $V_{R\_bas}$ from a base voltage supply part 48 is subtracted and inputted relative to the subtracting part 41. A subtracted result ($V_{rg}$ - $V_{R\_bas}$) is multiplied by 1/2 in a gain part 42 and an obtained value (= ($V_{rg}$ - $V_{R\_bas}$)/2) is inputted to a multiplying part 43. A corrected rotation speed $\omega_c$ calculated in a corrected rotation speed calculation part 46 is inputted to the multiplying part 43. A multiplied result of the multiplying part 43 is subtracted and inputted to a subtracting part 44 and a motor rotation speed $\omega_1$ is also added and inputted to the subtracting part 44. A rotation speed $\omega_2$ is inputted to a current command limit value calculation part 45. A calculated current command limit value $I_{ref\_lim}$ is outputted and inputted to a motor driving part to correct a current command value and drive the motor and inputted to a unit delay part 47. The corrected rotation speed calculation part 46 calculates the corrected rotation speed $\omega_c$ based on a current command limit value $I_{ref\_lim}$' before one sampling that is inputted from the unit delay part 47 and inputs the corrected rotation speed $\omega_c$ to the multiplying part 43.

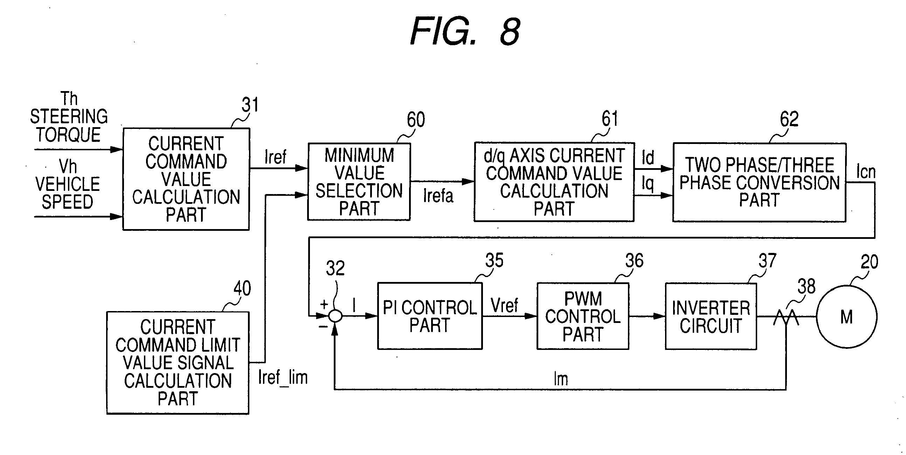

The current command limit value signal calculation part 40 having the above-described structure is connected as shown in Fig 8 in a vector controller of the electric power steering device. Namely, the current command value $I_{ref}$ calculated in the current command value calculation part 31 based on the steering torque $T_h$ and the vehicle speed $V_h$ is inputted to a minimum value selection part 60 and the current command limit value $I_{ref\_lim}$ from the current command limit value signal calculation part 40 is also inputted to the minimum value selection part 60. A current command value $I_{refa}$ (a smaller one of $I_{ref}$ and $I_{ref\_lim}$) selected in the minimum value selection part 60 is inputted to a d/q axis current command value calculation part 61. A d-axis current command value Id and a q-axis current command value $I_q$ calculated in the d/q axis current command value calculation part 61 are inputted to a two phase/three phase conversion part 62, and a current command value $I_{cn}$ (n= a, b, c) of three phases is inputted to the subtracting part 32. Operations after the subtracting part 32 are the same as those of Fig. 6 except that the current command value has the three phases.

In the above-described current command limit value signal calculation part 40, the current command limit value $I_{ref\_lim}$ of the output is limited to have the motor driving voltage whose duty is 100 % with respect to the motor rotation speed $\omega_1$ and the supply voltage $V_{rg}$. However, actually, parameters may frequently vary due to a production tolerance of the motor and the controller (ECU) or an environmental change such as temperature to deviate from design conditions. Since the parameters vary as described above, there are arisen problems that noise is generated in the motor due to the saturation of the duty.

The present invention is devised by considering the above-described circumstances and it is an object of the present invention to provide a motor control method and a motor controller as follows. In the motor control method and motor controller according to the present invention, even when a production tolerance of a motor or a control unit (ECU) or the change of an environment arises, noise is not generated in the motor, the occurrence of a motor torque ripple due to the saturation of a motor applied voltage (duty of 100%) is prevented, a current command value is not excessively lowered and a maximum output of the motor canbe obtained by correcting a current command limit value. When the motor control method or the motor controller is applied to an electric power steering device, a torque ripple or abnormal sound due to the saturation of the applied voltage does not arise, so that the electric power steering device of a high output can be provided.

SUMMARY OF THE INVENTION

In order to achieve the object, according to a first aspect of the present invention, a motor control method for controlling a motor by a motor driving voltage command value of a PWM, the motor control method comprises:

calculating a degree of saturation of a motor driving voltage; and
correcting a motor current command limit value based on the degree of saturation of the driving voltage.

According to a second aspect of the present invention as set forth in the first aspect of the present invention, it may be adapted that the degree of saturation of the driving voltage is calculated based on a deviation between the motor driving voltage command value and the motor voltage command limit value.

According to a third aspect of the present invention as set forth in the first aspect of the present invention, it may be adapted that the degree of saturation of the driving voltage is calculated based on a deviation between the motor driving voltage command value and a supply voltage.

According to a fourth aspect of the present invention as set forth in the second aspect of the present invention, it may be adapted that the degree of saturation of the driving voltage is calculated based on the integrated value of the deviation between rotating angles of the motor.

According to a fifth aspect of the present invention as set forth in the second aspect of the present invention, it may be adapted that the degree of saturation of the driving voltage is calculated based on the average value of the deviation between the rotating angles of the motor.

According to a sixth aspect of the present invention as set forth in the second aspect of the present invention, it may be adapted that the degree of saturation of the driving voltage is calculated based on the integrated value of the deviation every prescribed time.

According to a seventh aspect of the present invention as set forth in the second aspect of the present invention, it may be adapted that the degree of saturation of the driving voltage is calculated based on the average value of the deviation every prescribed time.

According to an eighth aspect of the present invention, a motor controller for controlling a motor by a motor driving voltage command value of a PWM, the motor controller comprises:

a calculation unit that calculates a degree of saturation of a motor driving voltage; and
a correcting unit that corrects a motor current command limit value based on the degree of saturation of the driving voltage.

According to a ninth aspect of the present invention as set forth in the eighth aspect of the present invention, it may be adapted that the calculation unit calculates the degree of saturation of the driving voltage based on a deviation between the motor driving voltage command value and the motor voltage command limit value.

According to a tenth aspect of the present invention as set forth in the eighth aspect of the present invention, it may be adapted that the calculation unit calculates the degree of saturation of the driving voltage based on a deviation between the motor driving voltage command value and a supply voltage.

According to an eleventh aspect of the present invention as set forth in the ninth aspect of the present invention, it may be adapted that the calculation unit calculates the degree of saturation of the driving voltage based on the integrated value of the deviation between rotating angles of the motor.

According to a twelfth aspect of the present invention as set forth in the ninth aspect of the present invention, it may be adapted that the calculation unit calculates the degree of saturation of the driving voltage based on the average value of the deviation between the rotating angles of the motor.

According to a thirteenth aspect of the present invention as set forth in the ninth aspect of the present invention, it may be adapted that the calculation unit calculates the degree of saturation of the driving voltage based on the integrated value of the deviation every prescribed time.

According to a fourteenth aspect of the present invention as set forth in the ninth aspect of the present invention, it may be adapted that the degree of saturation of the driving voltage is calculated based on the average value of the deviation every prescribed time.

According to the motor control method and the motor controller of the present invention, since the degree of saturation (the degree of tolerance) of the motor applied voltage (duty) by the PWM is always monitored with respect to the change of the parameters due to the unevenness during the production of the motor or the control unit or the change of the environment such as temperature and the current command limit value is corrected based on the monitor, the abnormal sound of the motor due to the saturation of the driving voltage can be prevented and the fall of the output of the motor due to an excessive suppression of the voltage (duty) can be prevented.

According to the motor control method and the motor controller of the present invention, the generation of the motor torque ripple caused by the saturation of the duty can be suppressed and an uncomfortable vibration or abnormal sound is restrained from being given to a driver.

Since the motor control method and the motor controller of the present invention is the torque (current) control, the present invention can be applied to the electric power steering device.

BRIEF DESCRIPTION OF THE DRAWINGS

Fig. 1 is a block diagram of a current command limit value signal calculation part showing a structural example of the present invention;
Fig. 2 is a diagram for explaining the present invention;
Fig. 3 is a diagram for explaining the present invention;
Fig. 4 is a flowchart showing an operational example of the present invention;
Fig. 5 is a diagram showing a schematic structure of an ordinary electric power steering device;
Fig. 6 is a block diagram showing a structural example of a control unit;
Fig. 7 is a block diagram showing a usual current command limit value signal calculation part; and
Fig. 8 is a block diagram showing one example of a usual motor control system.

DESCRIPTION OF EXEMPLARY EMBODIMENTS

A motor control method and a motor controller according to the present invention calculate a degree of saturation of a motor driving voltage (or a degree of tolerance of a driving voltage) controlled by a PWM to correct a motor current command limit value based on the degree of saturation of the driving voltage. Thus, the occurrence of an abnormal sound of a motor due to the saturation of a motor applied voltage is prevented and a phenomenon that the output of the motor is lowered by excessively limiting the command value is also prevented with respect to the change of parameters generated due to a production tolerance of the motor or a control unit (ECU) or the change of an environment.

The present invention adds a current command limit value correcting function with respect to the current command limit value signal calculation part 40 shown in Fig. 7. Even when a production tolerance or an environmental change arises, the saturation of duty is not caused and the occurrence of a torque tipple or the abnormal sound of the motor can be suppres sed by the current command limit value correcting function.

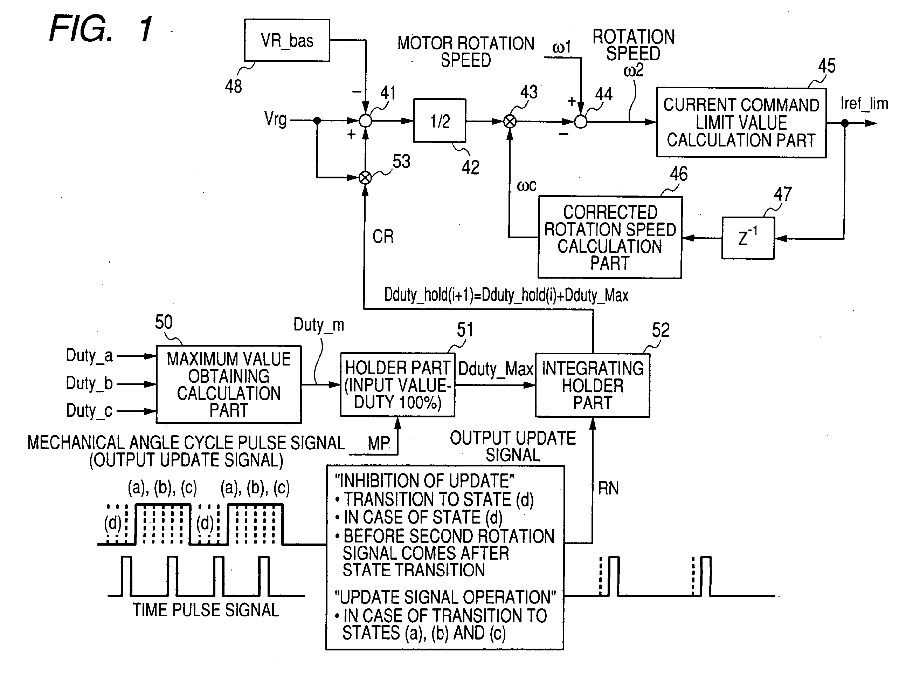

The setup of the present invention is shown in Fig. 1. A current command limit value correcting part is added to the current command limit value signal calculation part 40 shown in Fig. 7. Parts the same as those of Fig. 7 are designated by the same reference numerals and explanations of them are omitted.

The current command limit value correcting part of the present invention includes a maximum value obtaining calculation part 50 for obtaining a maximum value (an envelope) of duties Duty_a, Duty_b and Duty_c as driving voltages from a PWM control part, a holder part 51 for inputting a maximum value Duty-m obtained in the maximum value obtaining calculation part 50 and a mechanical angle cycle pulse signal MP from a rotation sensor to calculate and hold (input value - Duty 100 %), an integrating holder part 52 for integrating a hold value $D_{duty-Max}$ from the holder part 51 by an output update signal RN, and a multiplying part 53 for multiplying a correction signal CR from the integrating holder part 52 by a supply voltage $V_{rg}$.

To the holder part 51, the maximum value Duty_m is inputted from the maximum value obtaining calculation part 50 to calculate the hold value $D_{duty-Max}$ (= an input value - duty of 100 %), that is, $D_{duty-Max}$ (= Duty_m - Duty 100 %) at a timing that the mechanical angle cycle pulse signal MP is inputted. The hold value $D_{duty-Max}$ calculated in the holder part 51 is inputted to the integrating holder part 52 together with the output update signal RN. The integrating holder part 52 carries out a calculation only when the output update signal RN becomes a pulse type signal. In other cases than the above-described case, the integrating holder part 52 does not carry out the calculation and only holds the calculated result of the last time. When the integrating holder part 52 carries out the calculation, the integrating holder part 52 adds the calculated result of the last time of the integrating holder part $D_{duty-hold}(i)$ is added to the inputted hold value $D_{duty-Max}$ to output an added result $CR = (D_{duty-hold}(i) + D_{duty-Max})$. The added result CR is inputted to the multiplying part 53 and multiplied by the supply voltage $V_{rg}$. A multiplied result is added to the supply voltage $V_{rg}$ and subtracted from a base voltage $V_{R\_baa}$ in an adding part 41.

When set parameters of a system and environmental conditions are the same as designed values, a current command limit value calculation map and a corrected rotation speed calculation map calculate a current command limit value $I_{ref\_lim}$ in accordance with a motor rotation speed $\omega_1$ and the supply voltage $V_{rg}$. The current command limit value $I_{ref\_lim}$ is such a value as to have just the Duty 100%. Namely, whenever the motor rotation speed $\omega_1$ and the supply voltage $V_{rg}$ are understood, the current command limit value $I_{ref\_lim}$ having the Duty 100 % can be generated by the current command limit value calculation map and the corrected rotation speed calculation map obtained in an off-line.

On the other hand, when the parameters of the system are different from the designed values, the current command value having the duty 100% cannot be generated in accordance with the above-described calculation. Thus, a part whose duty does not reach 100 % (a degree of saturation or a degree of tolerance) is calculated to convert to a part corresponding to the change of the supply voltage and further calculate the current command limit value based on the corrected rotation speed calculation map. Since the saturated part of the duty corresponds to the change of the supply voltage, only the corrected rotation speed calculation map may be used. The calculated current command value $I_{ref}$ is such a value to have the duty of 100 %. The reason will be described below.

When a terminal voltage of a d/q axis motor under a vector control is calculated in accordance with design conditions, Eq.(1) is given as described below.

$$\begin{cases} V_d = i_d(R_m + R_{ac} + R_{ac\_me}) + L_m \cdot \dfrac{di_d}{d\theta_e} \cdot \omega_e + L_m \omega_e i_q + \dfrac{n}{1000} \cdot e_d \\[3mm] V_q = i_q(R_m + R_{ac} + R_{ac\_me}) + L_m \cdot \dfrac{di_q}{d\theta_e} \cdot \omega_e + L_m \omega_e i_d + \dfrac{n}{1000} \cdot e_q \end{cases} \tag{1}$$

where
$V_d$ and $V_q$ are terminal voltages of the d/q axis motor,
$I_d$ and $I_q$ are d/q axis motor currents,
$R_m$, $R_{ac}$ and $R_{ac\_me}$ are the internal resistances of the motor and the control unit,
$L_m$ is motor inductance,
$e_d$ and $e_q$ are d/q axis back electromotive voltages at motor rotation speed 1000[rpm],
n is motor rotation speed,
$\omega_e$ is motor angular velocity, and
$\theta_e$ is motor electric angle.

There is unevenness in resistance. When the resistance changes depending on temperature, as voltage equation, Eq. (2)is given as described below.

$$\begin{cases} V_{d1} = i_d(R_m + R_{ac} + R_{ac\_me} + \delta R) + L_m \cdot \dfrac{di_d}{d\theta_e} \cdot \omega_e + L_m \omega_e i_q + \dfrac{n}{1000} \cdot e_d \\[4mm] V_{q1} = i_q(R_m + R_{ac} + R_{ac\_me} + \delta R) + L_m \cdot \dfrac{di_q}{d\theta_e} \cdot \omega_e + L_m \omega_e i_d + \dfrac{n}{1000} \cdot e_q \end{cases} \quad (2)$$

where 5R is the change of the resistance of the motor and the control unit.

Assuming that the duty is set to 100 % in Eq.(1), the degree of saturation (the degree of tolerance) of the duty to the Eq. (2) is recognize in accordance with below-described calculation due to the change of the resistance.

$$\begin{cases} V_d = i_d \delta R \\ V_q = i_q \delta R \end{cases} \quad \dots (3)$$

where $\delta V_d$ and $\delta V_q$ are the change values of the terminal voltage of the motor d/q axis.

The degree of saturation (the degree of tolerance) made to be clear by the above-described Eq. (3) is more specifically investigated. When a voltage variation $\delta V_{un}$ between a motor terminal and a neutral point is given by 2/3 phase converting equation, Eq.(4) is given as described below.

$$\begin{cases} \delta V_{un} = \delta V_d \cos\theta_e + \delta V_q \sin\theta_e = \delta R(i_d \cos\theta_e + i_d \sin\theta_e) \\ \delta V_{vn} = \delta V_d \cos(\theta_e + 120) + \delta V_q \sin(\theta_e + 120) = \delta R(i_d \cos(\theta_e + 120) + i_d \sin(\theta_e + 120)) \\ \delta V_{wn} = \delta V_d \cos(\theta_e + 240) + \delta V_q \sin(\theta_e + 240) = \delta R(i_d \cos(\theta_e + 240) + i_d \sin(\theta_e + 240)) \end{cases}$$

$$\dots (5)$$

where $\delta V_{un}$, $\delta V_{vn}$ and $\delta V_{wn}$ are respectively change values of voltage between terminals and neutral points of UVW phases.

Further, the variation of a voltage between a neutral point and a ground is represented by Eq. (5) as described below.

$$\delta V_{ng} = 0.5[max(\delta V_{un}, \delta V_{vn}, \delta V_{wn}) + min(\delta V_{un}, \delta V_{vn}, \delta V_{wn})]$$

$$= \delta n f(i_d, i_q, e_d, e_q, \theta_e) \quad \dots (5)$$

The variation of voltage $\delta V_{ug}$ between the motor terminal and the ground indicates the sum of the variation of the voltage $\delta V_{un}$ between the motor terminal and the neutral point and the variation of the voltage $\delta V_{ng}$ between the neutral point and the ground and is represented by Eq. (6) as described below.

$$\delta V_{ug} = \delta V_{un} + \delta V_{ng}$$
$$= \delta R (i_d cos\theta_e + i_q sin\theta_e) + \delta R f(i_d, i_q, e_d, e_q, \theta_e)$$
$$= \delta R (i_d cos\theta_e + i_q sin\theta_e) + f(i_d, i_q, e_d, e_q, \theta_e) \qquad (6)$$

When the duty is 100 %, the motor terminal voltage is the same as the supply voltage $V_{rg}$. Thus, the variation of the motor terminal voltage is the same as the variation of the supply voltage $V_{rg}$. Then, the voltage variation $\delta V_r$ of the supply voltage $V_{rg}$ is calculated by below-described Eq.(7).

$$\delta V_r = \delta V_{ug} = \delta R (i_d cos\theta_e + i_q sin\theta_e) + f(i_d, i_q, e_d, e_q, \theta_e)) \qquad (7)$$

Further, since the motor terminal voltage is proportional to the duty, the voltage variation $\delta V_r$ shows the degree of saturation of the duty. As can be understood from the Eq.(7), the degree of saturation of the duty generated due to the variation of resistance can be represented by the voltage variation $\delta V_r$ of voltage $V_r$.

Further, a corrected rotation speed calculation part to be used has a function for setting the duty to 100% with respect to the variation of the $V_r$ voltage as shown in below-described Eq.(8).

$$\begin{cases} \delta V_d = L_m \cdot \dfrac{di_d}{d\theta_e} \cdot \delta \omega_e + L_m \delta \omega_e i_q + \dfrac{\delta n}{1000} \cdot e_d \\ \\ \delta V_q = L_m \cdot \dfrac{di_q}{d\theta_e} \cdot \delta \omega_e + L_m \delta \omega_e i_d + \dfrac{\delta n}{1000} \cdot e_q \end{cases} \qquad (8)$$

When voltage variation $\delta V_{un}$ between the motor terminal and the neutral point is given by the 2/3 phase converting equation, below-described Eq.(9) is given by the above-described Eq.(4).

$$\begin{cases} \delta V_{un} = \delta V_d \cos\theta_e + \delta V_q \sin\theta_e = \delta n \left\{ \left[ \dfrac{2\pi L_m P}{60}(\dfrac{di_d}{d\theta_e}+i_q)+\dfrac{1}{1000}e_d \right]\cos\theta_e + \left[ \dfrac{2\pi L_m P}{60}(\dfrac{di_q}{d\theta_e}+i_d)+\dfrac{1}{1000}e_q \right]\sin\theta_e \right\} \\ \delta V_{vn} = \delta V_d \cos(\theta_e+120)+\delta V_q \sin(\theta_e+120) = \delta n \left\{ \left[ \dfrac{2\pi L_m P}{60}(\dfrac{di_d}{d\theta_e}+i_q)+\dfrac{1}{1000}e_d \right]\cos(\theta_e+120)+ \left[ \dfrac{2\pi L_m P}{60}(\dfrac{di_q}{d\theta_e}+i_d)+\dfrac{1}{1000}e_q \right]\sin(\theta_e+120) \right\} \\ \delta V_{wn} = \delta V_d \cos(\theta_e+240)+\delta V_q \sin(\theta_e+240) = \delta n \left\{ \left[ \dfrac{2\pi L_m P}{60}(\dfrac{di_d}{d\theta_e}+i_q)+\dfrac{1}{1000}e_d \right]\cos(\theta_e+240)+ \left[ \dfrac{2\pi L_m P}{60}(\dfrac{di_q}{d\theta_e}+i_d)+\dfrac{1}{1000}e_q \right]\sin(\theta_e+240) \right\} \end{cases}$$

$$\dots (9)$$

Further, the variation of voltage between the neutral point and the ground is represented by below-described Eq. (10) .

$$\delta V_{ng} = 0.5 \left[ max\left(\delta V_{un}, \delta V_{vn}, \delta V_{wn}\right) + min\left(\delta V_{un}, \delta V_{vn}, \delta V_{wn}\right) \right]$$

$$= \delta_n F\left(i_d, i_q, e_d, e_q, \theta_e\right) \qquad (10)$$

The variation $\delta V_r$ of the $V_r$ voltage is represented by below-described Eq.(11).

$$\delta V_r = \delta V_{nd} = \delta V_{m} + \delta V_{nq} = \delta n \left\{ \left[ \frac{2\pi L_m P}{60} \left(\frac{di_d}{d\theta_e} + I_q\right) + \frac{1}{1000} e_d \right] \cos\theta_e + \left[ \frac{2\pi L_m P}{60}\left(\frac{di_q}{d\theta_e} + I_d\right) + \frac{1}{1000} e_q \right] \sin\theta_e + F(I_d, I_q, e_d, e_q, \theta_e) \right\}$$

$$\dots (11)$$

It is understood from the above-described Eq.(11) that the values of the corrected rotation speed map are not related to the resistance values. That is, the equation indicates that the change of internal resistance values due to the change of an environment is not related to the parameters of the corrected rotation speed map. Therefore, even when the resistance changes, the characteristics of the corrected rotation speed calculation map do not change (conclusion 1). Further, The variation $\delta_n$ of the motor rotation speed to be caused by the variation of the supply voltage $V_{rg}$ is a function of the supply voltage $V_{rg}$. Thus, the variation $\delta V_r$ of the voltage can be absorbed by adjusting the variation $\delta_n$ of the motor rotation speed (conclusion 2). As described above, when only the resistance of the motor or the internal resistance of the control unit changes, the characteristics of the corrected rotation speed calculation map do not change according to the conclusion 1. Thus, the characteristics of the corrected rotation speed calculation map are treated in the same manner as that before the resistance changes. Further, the saturation (the tolerance) of the duty generated due to the change of the motor resistance and the internal resistance of the control unit is finally reflected in the variation $\delta V_r$ of the voltage as shown in the Eq.(7). Further, according to the conclusion 2, the saturation (the tolerance) of the duty can be removed by adjusting the variation $\delta_n$ of the motor rotation speed based on Eq.(11).

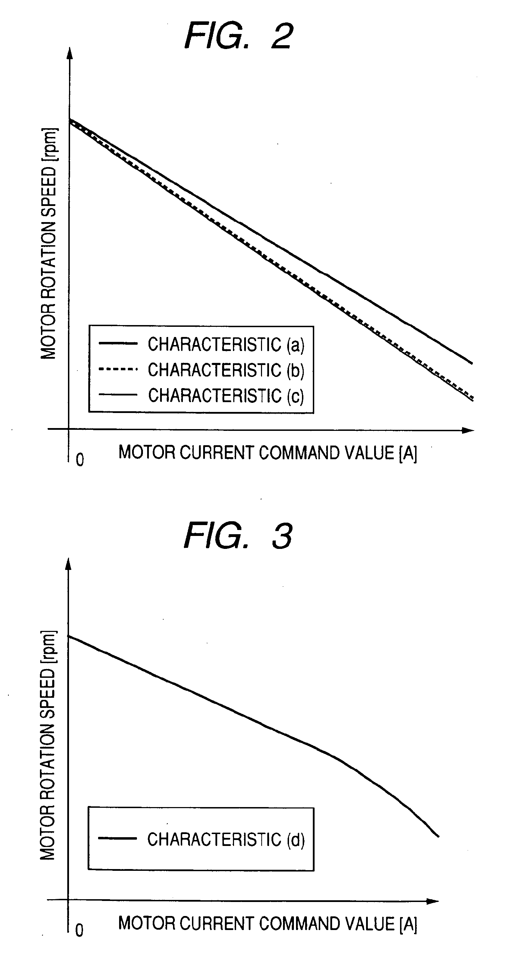

Figs. 2 and 3 show the characteristics of the motor rotation speed with respect to the motor current command value. The characteristic (a) in Fig. 2 shows the current command value $I_{ref\_lim}$ obtained in accordance with the design conditions. The characteristic (b) shows an ideal current command value $I_{ref\_lim}$ obtained when the duty is 100 % after the resistance changes. The characteristic (d) in Fig. 3 shows a corrected rotation speed calculation characteristic when the supply voltage $V_r$ varies by 2 [V]. Further, the characteristic (c) in Fig. 2 shows a characteristic obtained by synthesizing the characteristic (a) in Fig. 2 with the characteristic (d) in Fig. 3 with respect to the degree of saturation of the duty. The synthesized characteristic (c) completely corresponds to the characteristic (b) in Fig. 2. That is, even when the change of the voltage arises, if the degree of the saturation of the duty is understood in accordance with the characteristic (a) and the characteristic (d), the current command limit value can be corrected.

When the resistance changes, in calculation of a part that the duty is not 100% (the degree of saturation or the degree of tolerance), a maximum error between the duty applied to each phase and the duty 100% is taken so that the degree of saturation or the degree of tolerance can be understood. To take a stable value, the maximum error within one rotation of the motor may be employed.

The setup of Fig. 1 shows an example of driving a three-phase motor. The driving duties Duty_a, Duty_b and Duty_c of the three-phase motor are inputted to the maximum value obtaining calculation part 50 to obtain the maximum value Duty-m as the envelope of the three-phase duties. The maximum value Duty_m is inputted to the holder part 51. The difference $D_{duty-Max}$ relative to the Duty 100 % is outputted for each rotation of the motor based on the mechanical angle cycle pulse signal MP and updated by the output update signal RN in the integrating holder 52 in accordance with Table 1.

TABLE 1

| Limited state of current command limit value | State of Duty | Notes of state | State number |
| --- | --- | --- | --- |
| Operation | $D_{duty\_max} > 0$ (Duty saturated) | Current command value is insufficiently limited | (a) |

(continued)

| Limited state of current command limit value | State of Duty | Notes of state | State number |
|---|---|---|---|
| | $D_{duty\_max} \leq 0$ (Duty non-saturated) | Current command value is excessively limited (with margin) | (b) |
| Non-operation | $D_{duty\_max} > 0$ (Duty saturated) | Current command value is insufficiently limited | (c) |
| | $D_{duty\_max} \leq 0$ (Duty non-saturated) | Ordinary state | (d) |

The limited state of the current command limit value in Table 1 shows whether the calculated value of the current command limit value is smaller (operation) or not (non-operation) smaller than the current command value outputted from a current command value calculation part. As apparent from the Table 1, in the states (a), (b) and (c) except the state (d), the current command limit values need to be corrected. When the states (a), (b) and (c) continue, the current command limit values are periodically corrected. The above-described current command limit value correcting operation is summarized as described below.

When the state shifts to the states (a) to (c) except the state (d), or a cyclic signal is inputted, a current command limit value correcting and update signal operation is carried out. In the case of a state transition (excluding the state (d)), an update signal operation is always carried out. At the same time, the cyclic signal is reset. On the other hand, when the state shifts to the state (d), in the case of the state (d), and before a signal of a second rotation of the motor comes after the state shifts to the states (a)-(c), the update signal operation is inhibited. The update signal operation is inhibited before the signal of the second rotation of the motor comes after the state shifts to the states (a), (b) and (c) in order to obtain a precise duty error.

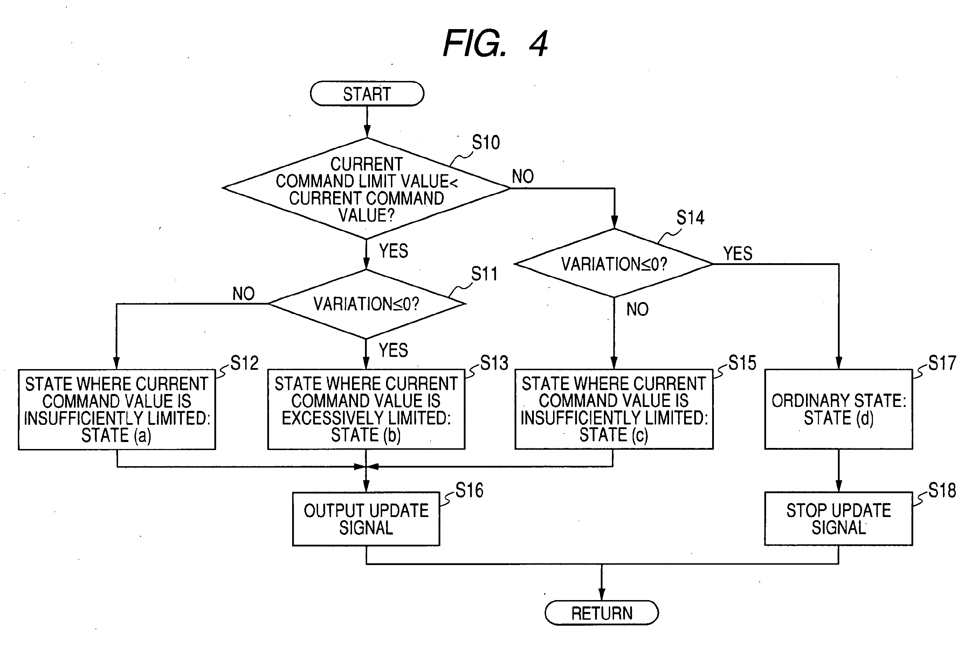

Then, an operation of the present invention will be described by referring to a flowchart of Fig. 4.

Firstly, the calculated current command limit value ($I_{ref\_lim}$) is compared with the current command value ($I_{ref}$) calculated in accordance with a torque (step S10). When the current command limit value is smaller than the current command value, the current command limit value operates (step S10) to shift to a step S11. In the step S11, the driving duty value (Duty_m) detected from the maximum value obtaining calculation part 50 is inputted to the holder part 51 to calculate the difference ($D_{duty-Max}$) (the variation) with respect to the voltage command limit value. When the difference $D_{duty-Max}$ is more than 0, the procedure shifts to step S12 to decide that the current command value is insufficiently limited (the state (a)) and output the update signal to the integrating holder part 52 (step S16). Then, in the step S11, when the difference $D_{duty-Max}$ is 0 or less, the procedure shifts to step S13 to decide that the current command value is excessively limited (the state (b)) and output the output update signal RN to the integrating holder part 52 (step S16). Further, in the step S10, when the current command limit value is the current command value or more, the current command limit value does not operate to shift step S14. In the step S14, the difference ($D_{duty-Max}$) between the driving duty value (Duty_m) detected from the maximum value obtaining calculation part 50 and the voltage command limit value is calculated. When the difference $D_{duty-Max}$ is more than 0, the procedure shifts to step S15 to decide that the current command value is insufficiently limited (the state (c)) and output the output update signal RN to the integrating holder part 52 (step S16). Then, in the step S14, when the difference $D_{duty-Max}$ is 0 or less, the procedure shifts to step S17 to decide that the state is an ordinary state (the state (d)) and stop the output update signal RN (step S18).

Since the motor control method and the motor controller of the present invention control the torque (current), the present invention can be applied to a motor control of the electric power steering device of the vehicle.

While there has been described in connection with the exemplary embodiments of the present invention, it will be obvious to those skilled in the art that various changes and modification may be made therein without departing from the present invention. It is aimed, therefore, to cover in the appended claim all such changes and modifications as fall within the true spirit and scope of the present invention.

[Fig. 1]

| 45 | current command limit value calculation part |
|---|---|
| 46 | corrected rotation speed calculation part |
| 50 | maximum value obtaining calculation part |
| 51 | holder part (input value - Duty 100%) |
| 52 | integrating holder part |
| $\omega_1$ | motor rotation speed |

ω<sub>2</sub>    rotation speed

$\omega_2$    rotation speed

RN    output update signal

MP    mechanical angle cycle pulse signal (output update signal)

#1    "inhibition of update"

#2    Transition to state (d)

#3    In case of state (d)

#4    Before second rotation signal comes after state transition.

#5    "update signal operation"

#6    In case of transition to states (a), (b) and (c)

#7    time pulse signal


[Fig. 2]


#1    characteristic (a)

#2    characteristic (b)

#3    characteristic (c)

#4    motor current command value [A]

#5    motor rotation speed [rpm]


[Fig. 3]


#1    characteristic (d)

#2    motor current command value [A]

#3    motor rotation speed [rpm]


[Fig. 4]


S10    current command limit value < Current command value ?

S11    variation $\leq$ 0 ?

S12    state where current command value is insufficiently limited: state (a)

S13    state where current command value is excessively limited: state (b)

S14    variation $\leq$ 0 ?

S15    state where current command value is insufficiently limited: state (c)

S16    output update signal

S17    ordinary state: state (d)

S18    stop update signal


[Fig. 5]


10    torque sensor

12    vehicle speed sensor

20    motor

30    control unit

3    reduction gear

14    battery


[Fig. 6]


T<sub>h</sub>    steering torque

$T_h$    steering torque

V<sub>h</sub>    vehicle speed

$V_h$    vehicle speed

31    current command value calculation part

35    PI control part

36    PWM control part

37    inverter circuit


[Fig. 7]


45    current command limit value calculation part

46      corrected rotation speed calculation part

[Fig. 8]

$T_h$      steering torque
$V_h$      vehicle speed
31      current command value calculation part
35      PI control part
36      PWM control part
37      inverter circuit
40      current command limit value signal calculation part
60      minimum value selection part
61      d/q axis current command value calculation part
62      two phase/three phase conversion part

**Claims**

1.  A motor control method for controlling a motor by a motor driving voltage command value of a PWM, the motor control method comprising:

    calculating a degree of saturation of a motor driving voltage; and
    correcting a motor current command limit value based on the degree of saturation of the driving voltage.

2.  The motor control method according to claim 1, wherein the degree of saturation of the driving voltage is calculated based on a deviation between the motor driving voltage command value and the motor voltage command limit value.

3.  The motor control method according to claim 1, wherein the degree of saturation of the driving voltage is calculated based on a deviation between the motor driving voltage command value and a supply voltage.

4.  The motor control method according to claim 2, wherein the degree of saturation of the driving voltage is calculated based on the integrated value of the deviation between rotating angles of the motor.

5.  The motor control method according to claim 2, wherein the degree of saturation of the driving voltage is calculated based on the average value of the deviation between the rotating angles of the motor.

6.  The motor control method according to claim 2, wherein the degree of saturation of the driving voltage is calculated based on the integrated value of the deviation every prescribed time.

7.  The motor control method according to claim 2, wherein the degree of saturation of the driving voltage is calculated based on the average value of the deviation every prescribed time.

8.  A motor controller for controlling a motor by a motor driving voltage command value of a PWM, the motor controller comprising:

    a calculation unit that calculates a degree of saturation of a motor driving voltage; and
    a correcting unit that corrects a motor current command limit value based on the degree of saturation of the driving voltage.

9.  The motor controller according to claim 8, wherein the calculation unit calculates the degree of saturation of the driving voltage based on a deviation between the motor driving voltage command value and the motor voltage command limit value.

10. The motor controller according to claim 8, wherein the calculation unit calculates the degree of saturation of the driving voltage based on a deviation between the motor driving voltage command value and a supply voltage.

11. The motor controller according to claim 9, wherein the calculation unit calculates the degree of saturation of the driving voltage based on the integrated value of the deviation between rotating angles of the motor.

**12.** The motor controller according to claim 9, wherein the calculation unit calculates the degree of saturation of the driving voltage based on the average value of the deviation between the rotating angles of the motor.

**13.** The motor controller according to claim 9, wherein the calculation unit calculates the degree of saturation of the driving voltage based on the integrated value of the deviation every prescribed time.

**14.** The motor controller according to claim 9, wherein the degree of saturation of the driving voltage is calculated based on the average value of the deviation every prescribed time.

# FIG. 1

EP 1 903 671 A2

## FIG. 2

MOTOR ROTATION SPEED [rpm]

—— CHARACTERISTIC (a)
----- CHARACTERISTIC (b)
—— CHARACTERISTIC (c)

0    MOTOR CURRENT COMMAND VALUE [A]

## FIG. 3

MOTOR ROTATION SPEED [rpm]

—— CHARACTERISTIC (d)

0    MOTOR CURRENT COMMAND VALUE [A]

15

# FIG. 4

START

S10 — CURRENT COMMAND LIMIT VALUE< CURRENT COMMAND VALUE?

NO → S14 — VARIATION≤0?
YES → S11 — VARIATION≤0?

S11: NO → S12 — STATE WHERE CURRENT COMMAND VALUE IS INSUFFICIENTLY LIMITED: STATE (a)
S11: YES → S13 — STATE WHERE CURRENT COMMAND VALUE IS EXCESSIVELY LIMITED: STATE (b)

S14: NO → S15 — STATE WHERE CURRENT COMMAND VALUE IS INSUFFICIENTLY LIMITED: STATE (c)
S14: YES → S17 — ORDINARY STATE: STATE (d)

S16 — OUTPUT UPDATE SIGNAL

S18 — STOP UPDATE SIGNAL

RETURN

EP 1 903 671 A2

# FIG. 5

FIG. 6

## FIG. 7

# FIG. 8

**EP 1 903 671 A2**

## REFERENCES CITED IN THE DESCRIPTION

**Patent documents cited in the description**

- JP 2006253789 A
- JP 2005033957 A
- JP 10313600 A